Europäisches Patentamt

European Patent Office

Office européen des brevets

(11) Veröffentlichungsnummer: **0 383 040**
**A1**

# (12) EUROPÄISCHE PATENTANMELDUNG

(21) Anmeldenummer: **90101043.9**

(22) Anmeldetag: **19.01.90**

(51) Int. Cl.5: **B23K 26/00**

(30) Priorität: **26.01.89 DE 3902292**

(43) Veröffentlichungstag der Anmeldung:
**22.08.90 Patentblatt 90/34**

(84) Benannte Vertragsstaaten:
**AT BE CH DE DK FR GB IT LI NL SE**

(71) Anmelder: **BÜCO BÜDENBENDER & CO.**
**Stader Elbstrasse 4**
**D-2160 Stade(DE)**

(72) Erfinder: **Büdenbender, Bernd**
**Schubertweg 5,**
**D-2160 Stade(DE)**

(74) Vertreter: **Grosse, Dietrich, Dipl.-Ing. et al**
**Patentanwälte**
**HEMMERICH-MÜLLER-GROSSE-POLLMEIER--**
**MEY-VALENTIN Hammerstrasse 2**
**D-5900 Siegen 1(DE)**

(54) **Verfahren und Anordnung zum zusätzlichen Verschweissen eines Falzes eines Behälters.**

(57) Beim zusätzlichen Verschweißen von einen Boden oder Deckel mit dem Rumpf eines Metallbehälters verbindenden Falzen wird der Laserstrahl (3) gegen den Rumpf (1) und in den zwischen den Mantellinien des Rumpfes (1) und des Falzes (6) gebildeten Winkel gerichtet, so daß eine winkelspiegelartige optische Falle für reflektierte Anteile des Laserstrahles gebildet wird, die auch geringe Richtungs-und Fokussierungsfehler auszugleichen vermag. Zur Durchführung des Verfahrens wird eine Spannvorrichtung für Behälter benutzt, und der den Laserstrahl (3) bewirkende Lasergenerator wird in die Fuge gerichtet, die sich zwischen dem Falz (6) und dem Außenmantel des Rumpfes (1) bildet, wobei mittels einer Antriebsvorrichtung der Rumpf relativ gegen den Laserstrahl mit Schweißgeschwindigkeit bewegt, vorzugsweise gedreht, wird. Die Erfindung kann auch so realisiert werden, daß der Laserstrahl (3) in die Fuge gerichtet wird, die sich zwischen dem Innenmantel des Rumpfes und dem Ansatz eines in das Rumpfende eingesetzten Deckels oder Bodens bietet.

Fig.1

## Verfahren und Anordnung zum zusätzlichen Verschweißen eines Falzes eines Behälters

Die Erfindung betrifft ein Verfahren zum zusätzlichen Verschweißen des Verbindungsbereiches von durch Falzen mit einem Behälterrumpf verbundenem Deckel und/oder Boden mittels eines von einem Lasergenerator bewirkten Laserstrahles, der relativ entlang der zu bewirkenden Schweißnaht bewegt wird.

Aus M.Nowicki: Laser in Elektroniktechnologie und Materialbearbeitung, Akademische Verlagsgesellschaft Geest & Portig K.-G., Leipzig 1982, ist es bekannt, zum Verschweißen von Blechen einen Laserstrahl anzuwenden. Eine Vielzahl möglicher Schweißungen an Behältern wird durch die DE-OS 36 00 532 angegeben, ohne daß hierbei eine rationelle und sichere Fertigung oder auch nur eine gesicherte Abdichtung ausreichend berücksichtigt sind.

Die DE-OS 37 06 916 offenbart eine Verbindung von Böden und Deckeln von Behältern mit dem Rumpf durch Falzen, wobei durch Überschweißen des Falzes mittels eines Laserstrahles in jenen Bereichen, in denen im Falz übereinanderliegende Bleche unter Vorspannung aufeinanderliegen, eine verläßliche Verbindung geschaffen wird, so daß die durch den Falz bewirkte mechanische Verbindung ebenso sicher verstärkt wird wie die durch den Falz bewirkte Abdichtung. Wenn auch hierbei Vorsorge dafür getroffen werden kann, daß ein leichtes Auswandern des Strahles die Fokussierung nicht nachteilig beeinflußt, besteht aber doch die Möglichkeit, daß unter ungünstigen Umständen bei der Verarbeitung heller Bleche, bspw. Weißblech oder Aluminiumblechen, ein Teil der Energie reflektiert wird und für die Schweißung verlorengeht.

Die Erfindung geht von der Aufgabe aus, eine verläßliche, sichere Schweißnaht zu schaffen, welche sowohl die mechanische Festigkeit erhöht als auch eine verläßlich dichte Verbindung ergibt, und bei der auch beim leichten Auswandern der zu verschweißenden Teile gegenüber dem Laserstrahl dessen Wirkungsgrad weder durch Reflexion noch durch Defokussierung beeinträchtigt wird.

Gelöst wird diese Aufgabe mit den kennzeichnenden Merkmalen des Patentanspruches 1 oder 2 in Verbindung mit denen des Patentanspruches 4. In den hier empfohlenen Auftreffbereichen des Laserstrahles stehen die miteinander zu verschweißenden Bleche nicht nur in direktem, die Bildung einer Schweißnaht fördernden Kontakt, der Laserstrahl wird auch in eine Fuge bzw. in einen Winkel hineingerichtet, der als "Strahlenfalle" die gesamte Energie des Laserstrahles aufnimmt und Reflexionsverluste vermeidet. Die Schweißung findet darüber hinaus jeweils in Bereichen statt, in denen sich die durch die Schweißnaht bewirkte Verstärkung und Versteifung auf die Stabilität des zu erstellenden Behälters besonders günstig auswirkt, und andererseits ist auch die Schweißnaht gegen unvorteilhafte, sie stark belastende Spannungen geschützt, so daß die erlangte Abdichtung auch im strapaziösen Gebrauch des Behälters gesichert bleibt.

Die Schweißung läßt sich auch leicht bei unterschiedlichen Reihen von Behältern mit unterschiedlich ausgebildenden Falzen verwenden.

Besonders günstige Verhältnisse ergeben sich, wenn innerhalb von die Achse des Behälters und eine Mantellinie desselben aufweisenden Ebenen der Laserstrahl gegen die Mantellinien des Rumpfes um 5° bis 33° gegen den Laserstrahl geneigt sind, wobei der Laserstrahl gegen diese Ebene im Rahmen einer zweiten Komponente geneigt sein kann. Es kann sich als zweckmäßig erweisen, zusätzlich eine Abdichtung des Falzes durch übliche Dichtmassen vorzusehen.

Im einzelnen sind die Merkmale der Erfindung anhand der Beschreibung von Ausführungsbeispielen in Verbindung mit diese darstellenden Zeichnungen erläutert. Es zeigen hierbei:

Figur 1 einen Falzbereich eines Behälters mit einem eine Schweißnaht bildenden Laserstrahl, der von außen in den zwischen Mantel und Falz gebildeten Winkel gerichtet ist, und

Figur 2 in ähnlicher Darstellung einen Laserstrahl, der in die zwischen Rumpf und in diesen eingesetzten Deckel oder Boden gebildete Fuge gerichtet ist.

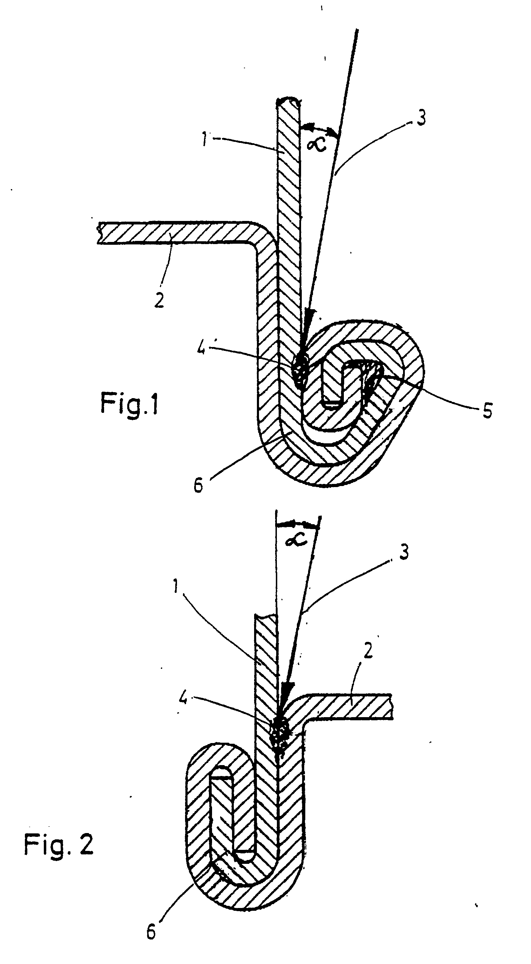

In Fig. 1 ist abgebrochen und geschnitten ein unterer Bereich eines Rumpfes 1 eines Behälters dargestellt, in den ein Boden 2 eingesetzt ist, dessen Rand mit dem des Rumpfes unter Bildung eines Falzes 6 verfalzt ist. In den zwischen dem Außenmantel des Rumpfes 1 und dem aufliegenden Bereiche des Falzes 6 gebildeten Winkel ist ein Laserstrahl 3 gerichtet, der den Grund des Winkels, nämlich einen Bereich des Rumpfes 1 und einen Bereich der äußeren, auf dem Rumpf 1 aufliegenden Bindung des Falzes 6, unter Bildung einer den Rumpf umziehenden endlosen, in der Figur ebenfalls geschnitten dargestellten Schweißnaht 4 miteinander verschweißt. Die Schenkel des hierbei gebildeten Winkels wirken hierbei als Winkelspiegel, so daß die durch den Laserstrahl 3 zugeführte Energie nur jeweils auf die gegenüberliegende Wandung reflektiert werden kann und damit nicht nach außen entweichen kann.

Um die Sicherheit der Abdeckung zusätzlich zu erhöhen, kann, bspw. bei der Bildung des Falzes 6, eine Dichtmasse 5 zugegeben werden. In jedem Falle aber versteift einerseits die ringförmige Schweißnaht 4 das Behälterende, indem mit dem Rumpf 1 die äußere Lage des Falzes 6 fest verbunden wird. Gleichzeitig wird durch die durchgehende, lückenfreie und feste Verbindung der Schweißnaht neben der mechanischen Aussteifung eine noch weiter gesicherte Abdichtung erreicht.

Bewährt hat es sich, daß auch bei innen beschichteten Behältern sich keine besonderen Probleme ergeben und ein ebenso problemloses Schweißverhalten erreicht wird. Ein mit einer derartigen Schweißnaht versehener Behälter zeichnet sich durch eine hohe Stabilität im Verbindungsbereich mit Deckel und Boden aus. Als vorteilhaft zeigt sich, daß eine derartige Schweißung bei unterschiedlichen Falzen, so bspw. Zwei-, Drei-oder Mehrfachfalzen, anwendbar ist. Die verdeckte Anordnung der Schweißnaht schützt sie ausgezeichnet gegen mechanische Beschädigungen, so daß die durch sie erwirkte Stabilität und insbesondere Abdichtung kaum zu beeinträchtigen sind. Es ist darüber hinaus auch möglich, bereits gefertigte Behälter zusätzlich und nachträglich im Verbindungsbereich durch Anbringen der Schweißnaht 4 zu verstärken. Die Dichtigkeit des Behälters ist in allen Fällen unabhängig von der Qualität des die eigentliche Verbindung bewirkenden Falzes.

In Fig. 2 wird in ähnlicher geschnittener und abgebrochener Darstellung die Möglichkeit gezeigt, zumindest einen Abschluß, nämlich Deckel oder Boden, anzufalzen und von innen zu verschweißen. Auch hier ist der Rumpf 1 eines Behälters mit dem Boden oder Deckel 2 durch einen Falz 6 verbunden, und ein schweißender Laserstrahl 3 wird hier in die Fuge gerichtet, die sich nach dem Einsetzen des Bodens 2 in das Ende des Rumpfes 1 im Wurzelbereiche des an die Deckfläche des Bodens anschließenden Mantelbereiches ergibt. Die hierbei gebildete, wiederum ringförmige und ununterbrochene Schweißnaht 4 befindet sich hier außerhalb des Falzes. Es werden praktisch alle Vorteile erreicht, die auch der Schweißnaht 4 der Fig. 1 zu eigen sind, indem im wesentlichen die Stabilität des Behälters im Deckel- bzw. Bodenbereich erhöht wird und durch ein problemloses Schweißen eine sichere Abdichtung erreicht wird. Zusätzlich macht sich hierbei noch vorteilhaft bemerkbar, daß sich eine günstige Vorspannung des Behälterbodens oder Deckels ergibt, die bei späteren Druckbelastungen des Behälters das axiale Vorwölben des Deckels oder Bodens erheblich reduziert, so daß weder beim Transport noch bei der Lagerung Probleme durch infolge Innendruckes vorgewölbter Böden oder Deckel entstehen. Auch hier wird zweckmäßig der Winkel α im Bereiche von 5˚ bis 33˚ gehalten, und im Bedarfsfalle kann der Falz 6 zusätzlich mit einer Dichtmasse ausgestattet sein.

Zur Herstellung solcher Schweißnähte wird zweckmäßig eine Spannvorrichtung zur Aufnahme des zu verschweißenden Behälters bzw. Behälterrumpfes vorgesehen. Mittels einer Antriebsvorrichtung wird entweder diese Spannvorrichtung bei feststehendem Lasergenerator verwendet, oder aber der Lasergenerator wird, gegebenenfalls zusätzlich, gegenüber dem Behälter gedreht. Hierbei ist es leicht möglich, durch mechanische, optische, induktive oder kapazitive Abtastung den Weg, bspw. den Drehweg des Behälters, zu verfolgen und hierbei Abstand und/oder Ausrichtung des Lasergenerators zu korrigieren, so daß der Laserstrahl auch bei Rundlauffehlern, Einspannfehlern oder dergleichen seine optimale Richtung beibehält.

## Ansprüche

1. Verfahren zum zusätzlichen Verschweißen des Verbindungsbereiches von durch Falzen mit einem Behälterrumpf verbundenem Deckel und/oder Boden mittels eines von einem Lasergenerator bewirkten Laserstrahles, der relativ entlang der zu bewirkenden Schweißnaht bewegt wird, **dadurch gekennzeichnet,** daß der Laserstrahl (3) gegen den Rumpf (1) in den zwischen Mantellinien des Rumpfes und dem Falz (6) gebildeten Winkel gerichtet ist.

2. Verfahren zum zusätzlichen Verschweißen des Verbindungsbereiches von durch Falzen mit einem Behälterrumpf verbundenem Deckel und/oder Boden mittels eines von einem Lasergenerator bewirkten Laserstrahles, der relativ entlang der zu bewirkenden Schweißnaht bewegt wird, **dadurch gekennzeichnet,** daß der Laserstrahl (3) gegen den Rumpf (1) in die zwischem dem Innenmantel des Rumpfes und dem die Grundfläche des Deckels bzw. des Bodens umschließenden Mantelansatz derselben gebildete Fuge gerichtet ist.

3. Verfahren nach Anspruch 1 oder 2, **dadurch gekennzeichnet,** daß der Laserstrahl (3) gegen Mantellinien des Rumpfes (1) um einen Winkel im Bereiche von 5˚ bis 33˚ geneigt ist.

4. Anordnung zur Durchführung des Verfahrens nach mindestens einem der Ansprüche 1 bis 3, **gekennzeichnet durch** eine Spannvorrichtung für Behälter bzw. deren Rümpfe (1), sowie durch einen einen Laserstrahl bewirkenden Lasergenerator, der den Laserstrahl (3) gegen den Rumpf (1) des Behälters in den zwischen dem Außenmantel des Rumpfes und einem ihn mit einem Deckel oder Boden verbindenden Falz gebildeten Winkel oder in die zwischen dem Innenmantel des Rumpfes und einem eingesetzten Deckel oder Boden gebildete Fuge richtet, sowie

durch eine Antriebsvorrichtung, welche den Rumpf (1) relativ gegen den Laserstrahl mit Schweißgeschwindigkeit bewegt, vorzugsweise dreht.

5. Nach einem der Verfahren nach Ansprüchen 1 bis 3 gebildete Schweißnaht,
**dadurch gekennzeichnet,**
daß der verbindende Falz zusätzlich mit einer Dichtmasse (5) ausgestattet ist.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN<br>Band 10, Nr. 191 (M-495)(2247) 4. Juli 1986; & JP - A - 61 037 389 (TOSHIBA CORPORATION) 22.02.1986<br>--- | 1-3 | B 23 K 26/00 |
| Y | EP-A-0 177 945 (BAYERISCHE MOTORENWERKE AG)<br>* Figur 1; Anspruch 1 *<br>--- | 1-3 | |
| A | EP-A-0 199 279 (KARL HUBER VERPACKUNGSWERKE GMBH & CO)<br>* Ansprüche; Figuren *<br>--- | 1 | |
| D,A | EP-A-0 200 098 (KARL HUBER VERPACKUNGSWERKE GMBH & CO)<br>* Figuren *<br>----- | 1 | |
| | | | **RECHERCHIERTE SACHGEBIETE (Int. Cl.5)**<br><br>B 21 D<br>B 65 D<br>B 23 K |

Der vorliegende Recherchenbericht wurde für alle Patentansprüche erstellt

| Recherchenort | Abschlußdatum der Recherche | Prüfer |
|---|---|---|
| BERLIN | 18-04-1990 | WUNDERLICH J E |